(19) Europäisches Patentamt
European Patent Office
Office européen des brevets

(11) Veröffentlichungsnummer: **0 417 043 A2**

(12) # EUROPÄISCHE PATENTANMELDUNG

(21) Anmeldenummer: **90810653.7**

(51) Int. Cl.[5]: **C08G 59/50**, C08G 18/64

(22) Anmeldetag: **29.08.90**

(30) Priorität: **07.09.89 CH 3246/89**

(43) Veröffentlichungstag der Anmeldung:
**13.03.91 Patentblatt 91/11**

(84) Benannte Vertragsstaaten:
**CH DE ES FR GB IT LI NL SE**

(71) Anmelder: **CIBA-GEIGY AG**
**Klybeckstrasse 141**
**CH-4002 Basel(CH)**

(72) Erfinder: **Parrinello, Giovanni, Dr.**
**Tervuursesteenweg 87**
**B-1982 Duisburg(BE)**

(54) **Neue Härter und Beschleuniger für Epoxid- und Isocyanatharze.**

(57) Beschrieben werden Zusammensetzungen enthaltend
A) ein Epoxidharz mit durchschnittlich mehr als einer 1 ,2-Epoxidgruppe pro Molekül oder eine aliphatische, cycloaliphatische, aromatische oder araliphatische Verbindung mit durchschnittlich mehr als einer Isocyanatgruppe pro Molekül und
B) eine Verbindung der allgemeinen Formel I

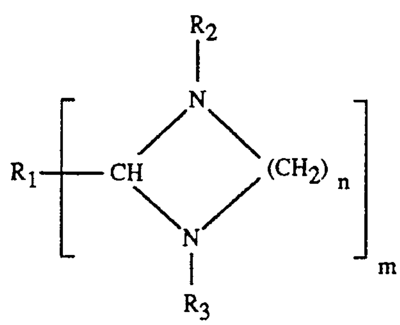

(I),

worin m und n unabhängig voneinander 2 oder 3 sind, $R_1$ ein zwei- oder dreiwertiger aromatischer Rest ist, und $R_2$ und $R_3$ unabhängig voneinander Wasserstoff, Alkyl, Alkenyl, Cycloalkyl, Aryl oder Aralkyl bedeuten.

EP 0 417 043 A2

## NEUE HÄRTER UND BESCHLEUNIGER FÜR EPOXID- UND ISOCYANATHARZE

Die vorliegende Erfindung betrifft Epoxid- und Polyisocyanatzusammensetzungen enthaltend neue Aminale als Härter oder Beschleuniger, die neuen Aminale, ein Verfahren zur Härtung von Epoxid- oder Isocyanatharzen, sowie die Verwendung der neuen Aminale als Härter oder Beschleuniger für Epoxid- oder Isocyanatharze.

Für die Härtung oder die Beschleunigung der Härtung von Epoxid- und/oder Isocyanatharzen wurde bereits unterschiedlichste sekundäre oder tertiäre Amine vorgeschlagen. Nur wenige dieser Systeme sind allerdings latent. Härtbare Systeme, die bei Raumtemperatur eine gute Lagerstabilität und bei der Härtungstemperatur eine hohe Reaktivität aufweisen, sind besonders erwünscht und es besteht weiterhin ein Bedarf danach. Es wurden jetzt ausgewählte Aminale mit diesem Eigenschaftsprofil gefunden, die sich als Härter oder als Beschleuniger für Epoxid- und/oder Isocyanatharze eignen.

Vorbekannte härtbare Systeme enthaltend Aminale sind im allgemeinen bei Raumtemperatur nicht ausreichend latent. Beispiele dafür sind die in der US-A-4,289,869 beschriebenen feuchtigkeitshärtenden Zusammensetungen enthaltend Polyisocyanat-Präpolymere und ausgewählte cyclische Aminale.

Die vorliegende Erfindung betrifft härtbare Zusammensetzungen enthaltend

A) ein Epoxidharz mit durchschnittlich mehr als einer 1,2-Epoxidgruppe pro Molekül oder eine aliphatische, cycloaliphatische, aromatische oder araliphatische Verbindung mit durchschnittlich mehr als einer Isocyanatgruppe pro Molekül und

B) eine Verbindung der allgemeinen Formel I

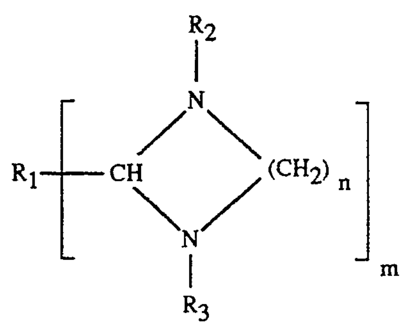 , (I)

worin m und n unabhängig voneinander 2 oder 3 sind, $R_1$ ein zwei- oder dreiwertiger aromatischer Rest ist, $R_2$ und $R_3$ unabhängig voneinander Wasserstoff, Alkyl, Alkenyl, Cycloalkyl, Aryl oder Aralkyl bedeuten, wobei die Reste $R_1$, $R_2$ oder $R_3$ unsubstituiert sind oder mit Alkyl-, Alkoxy-, Alkylthio-, Cycloalkyl-, Aryl-, Aralkyl-, Cyano- und/oder Alkoxycarbonylgruppen und/oder mit Halogenatomen substituiert sind, wobei in Alkylresten $R_2$ und/oder $R_3$ ein oder mehrere Kohlenstoffatome durch Sauerstoffatome ersetzt sein können, so dass Polyalkylenglykolreste auftreten, und wobei in cyclischen Resten $R_1$ bis $R_3$ ein bis drei Ringkohlenstoffatome durch Sauerstoff-, Schwefel- und/oder Stickstoffatome ersetzt sein können.

Weist die Verbindung der Formel I nur tertiäre Stickstoffatome auf ($R_2$ und $R_3$ sind ungleich Wasserstoff), so wird sie in der Regel als Beschleuniger in Kombination mit anderen Härtem für Epoxidharze oder als Härter oder Beschleuniger für Polyisocyanatverbindungen eingesetzt.

Verbindungen der Formel I, die mindestens ein sekundäres Stickstoffatom aufweisen, lassen sich auch als solche als Härter für Epoxidharze einsetzen. Dies kann mit oder ohne zusätzliche Beschleuniger erfolgen.

Als Komponente A) lassen sich alle an sich bekannten Polyepoxidharze und Polyisocyanate einsetzen.

Beispiele für Epoxidharze sind:

I) Polyglycidyl- und Poly-($\beta$-methylglycidyl)-ester, die beispielsweise durch Umsetzung von einer Verbindung enthaltend mindestens zwei Carboxylgruppen im Molekül mit Epichlorhydrin, Glycerindichlorhydrin oder mit $\beta$-Methylepichlorhydrin in Gegenwart von Basen erhalten werden können.

Beispiele für Verbindungen mit mindestens zwei Carboxylgruppen im Molekül sind gesättigte aliphatische Dicarbonsäuren, wie Bernsteinsäure, Adipinsäure oder Sebazinsäure; oder ungesättigte aliphatische

Dicarbonsäuren, wie Maleinsäure; oder cycloaliphatische Dicarbonsäuren, wie Hexahydrophthal-, oder Tetrahydrophthalsäure; oder aromatische Dicarbonsäuren, wie Phthal-, Isophthal- oder Terephthalsäure.

II) Polyglycidyl- und Poly-($\beta$-methylglycidyl)-ether, die beispielsweise durch Umsetzung einer Verbindung enthaltend mindestens zwei alkoholische Hydroxylgruppen und/oder phenolische Hydroxylgruppen im Molekül mit Epichlorhydrin, Glycerindichlorhydrin oder mit $\beta$-Methylepichlorhydrin unter alkalischen Bedingungen oder in Anwesenheit eines sauren Katalysators und anschliessender Alkalibehandlung erhalten werden können.

Beispiele für Verbindungen mit mindestens zwei alkoholischen Hydroxylgruppen und/oder phenolischen Hydroxylgruppen im Molekül sind aliphatische Alkohole, wie Ethylenglykol, Diethylenglykol und höhere Poly-(oxyethylen)-glykole, Propan-1,3-diol oder höhere Poly-(oxypropylen)-glykole, Butan-1,4-diol oder höhere Poly-(oxybutylen)-glykole, Hexan-1,6-diol, Hexan-2,4,6-triol, Glycerin, 1,1,1-Trimethylolethan, 1,1,1-Trimethylolpropan, Pentaerythrit, Sorbit oder Polyepichlorhydrine; oder cycloaliphatische Alkohole, wie 1,3- oder 1 ,4-Dihydroxycyclohexan oder 1,4-Cyclohexandimethanol; oder Alkohole enthaltend aromatische Gruppen, wie N,N-Bis-(2-hydroxyethyl)-anilin; oder ein- oder mehrkernige Polyphenole, wie Resorcin, Hydrochinon, Bis-(4-hydroxyphenyl)-methan (Bisphenol F), 2,2,-Bis-(4-hydroxyphenyl)-propan (Bisphenol A), bromiertes 2,2,-Bis-(4-hydroxyphenyl)-propan, Bis-(4-hydroxyphenyl)-ether, 1,1,2,2-Tetrakis-(4-hydroxyphenyl)-ethan oder Novolake, die durch Kondensation von Aldehyden, wie Formaldehyd, mit gegebenenfalls alkyl- oder halogen-substituierten Phenolen, wie Phenol, den oben beschriebenen Bisphenolen, 2- oder 4-Methylphenol, 4-tert.Butylphenol, p-Nonylphenol oder 4-Chlorphenol erhältlich sind.

III) Poly-(N-glycidyl)-verbindungen, die beispielsweise durch Dehydrochlorierung von Reaktionsprodukten von Epichlorhydrin mit Aminen, die mindestens zwei Aminowasserstoffatome enthalten, hergestellt werden können.

Beispiele für Amine, die solchen Epoxidharzen zugrunde liegen, sind aliphatische Amine, wie Hexamethylendiamin oder n-Butylamin, cycloaliphatische Amine, wie 1,4-Diaminocyclohexan, aromatische Amine, wie Anilin, p-Toluidin, Bis-(4-aminophenyl)-methan, Bis-(4-aminophenyl)-ether, Bis-(4-aminophenyl)-sulfon, 4,4′-Diaminobiphenyl oder 3,3′-Diaminobiphenyl; oder araliphatische Amine, wie m-Xylylendiamin. Zu den Poly-(N-glycidyl)-verbindungen zählen auch Triglycidylisocyanurat, N,N′-Diglycidylderivate von Cycloalkylenharnstoffen, wie von Ethylenharnstoff oder von 1,3-Propylenharnstoff, und N,N′-Diglycidylderiatve von Hydantoinen, wie vcn 5,5-Dimethylhydantoin.

IV) Poly-(S-glycidyl)-verbindungen, wie beispielsweise Di-S-glycidylderivate, die sich von Dithiolen, wie Ethan-1,2-dithiol oder von Bis-(4-mercaptomethylphenyl)-ether, ableiten.

V) Cycloaliphatische Epoxidharze oder Epoxidierungsprodukte von Dienen oder Polyenen, wie cycloaliphatische Epoxidharze, die beispielsweise durch Epoxidierung ethylenisch ungesättigter cycloaliphatischer Verbindungen hergestellt werden können. Beispiele dafür sind 1,2-Bis-(2,3-epoxycyclopentyloxy)-ethan, 2,3-Epoxycyclopentylglycidylether, der Diglycidylester der Cyclohexan- 1,2-dicarbonsäure, 3,4-Epoxycyclohexylglycidylether, Bis-(2,3-epoxycyclopentyl)-ether, Bis-(3,4-epoxycyclohexyl)-ether, 5(6)-Glycidyl-2-(1,2-epoxyethyl)-bicyclo[2.2.1]heptan, Dicyclopentadiendioxid, Cyclohexa-1,3-diendioxid, 3,4-Epoxy-6-methylcyclohexylmethyl-3′,4′-epoxy-6′-methylcyclohexancarboxylat oder 3,4-Epoxycyclohexylmethyl-3′,4′-epoxycyclohexancarboxylat.

Als Komponente A) lassen sich auch Epoxidharze verwenden, bei denen die 1,2-Epoxidgruppen an unterschiedliche Heteroatome bzw. funktionelle Gruppen gebunden sind; zu solchen Verbindungen zählen beispielsweise das N,N,O-Triglycidylderivat des 4-Aminophenols, das N,N,O-Triglycidylderivat des 3-Aminophenols, der Glycidyletherglycidylester der Salicylsäure, N-Glycidyl-N′-(2-glycidyloxypropyl)-5,5-dimethylhydantoin oder 2-Glycidyloxy-1,3-bis-(5,5-dimethyl-1-glycidylhydantoin-3-yl)-propan.

Bevorzugte Komponenten A) sind Polyglycidylether auf Basis eines Polyalkohols, besonders auf Basis von Bisphenolen und insbesondere auf Basis von Bisphenol F und Bisphenol A.

Bevorzugte Zusammensetzungen der vorliegenden Erfindung enthalten als Härter B) eine Verbindung der Formel I, worin mindestens eine der Gruppen $R_2$ oder $R_3$ Wasserstoff ist.

Besonders bevorzugte Zusammensetzungen der vorliegenden Erfindung enthalten als Komponente A) ein Epoxidharz und weisen neben Komponente B) einen zusätzlichen wärmeaktivierbaren Härter für Komponente A) auf, insbesondere Dicyandiamid. In diesen Zusammensetzungen liegt Komponente B) in einer die Härtungsreaktion beschleunigenden Menge vor und weist vorzugsweise nur tertiäre Stickstoffatome auf.

Beispiele für zusätzliche hitzeaktivierbare Härter für das Epoxidharz sind aromatische primäre oder sekundäre Amine, wie Bis-(4-aminophenyl)-methan oder Bis-(4-aminophenyl)-sulfon, oder Amidine, wie beispielsweise Dicyandiamid oder 1-Cyan-3-(niedrigalkyl)-guanidine, wie z.B. die 3-Methyl-, 3,3-Dimethyl- oder 3,3-Diethylderivate.

Ist Komponente A) eine aliphatische, cycloaliphatische, aromatische oder araliphatische Verbindung mit

durchschnittlich mehr als einer Isocyanatgruppe pro Molekül, so handelt es sich hierbei in der Regel um eine Verbindung enthaltend mehrere, insbesondere etwa zwei bis drei, Isocyanatgruppen oder um die Kombination eines Polyisocyanates mit Verbindungen enthaltend mehrere, insbesondere etwa zwei bis drei, Gruppen mit aktiven Wasserstoffatomen, wie Amino-, Säure- oder insbesondere Hydroxylgruppen.

Komponente A) enthält im allgemeinen ein Präpolymeres. Dabei kann es sich beispielsweise um ein Polyisocyanat-Präpolymeres handeln, um eine Kombination eines niedermolekularen Polyisocyanates mit einer präpolymeren Verbindung enthaltend mehrere Gruppen mit aktiven Wasserstoffatomen oder um eine Kombination eines PolyisocyanatPräpolymeren mit einer niedermolekularen Verbindung enthaltend mehrere Gruppen mit aktiven Wasserstoffatomen. Unter einer "niedermolekularen Verbindung" ist im Rahmen dieser Beschreibung eine Verbindung mit einem Molekulargewicht von weniger als etwa 1'000 zu verstehen. Unter einem "Präpolymeren" ist im Rahmen dieser Beschreibung eine Verbindung mit einem Molekulargewicht (Zahlenmittel) von etwa 1'000 bis 20'000 zu verstehen. Der Begriff "Polyisocyanat" umfasst auch Verbindungen, die von Isocyanaten abgeleitete Gruppen enthalten, welche sich im Verlaufe der Umsetzung wieder in Isocyanatgruppen spalten lassen Beispiele dafür sind mit Phenolen, Lactamen oder Ketoximen blockierte Isocyanatgruppen, Urethdiongruppen oder Carbodiimidgruppen.

Je nach eingesetzter Kombination lassen sich mit Komponente A) in an sich bekannter Weise Polyurethane, Polyharnstoffe oder andere aus der Chemie der Polyisocyanate an sich bekannte Polymere erhalten.

Beispiele für Polyisocyanat-Präpolymere sind Verbindungen, die durch Verkappen von hydroxylterminierten Präpolymeren, insbesondere von Polyestern oder Polyethern, mit aliphatischen, cylcloaliphatischen, aromatischen oder araliphatischen Poly-, insbesondere Di- oder Triisocyanaten erhältlich sind. Dabei wird die Verkappungskomponente im Ueberschuss vorgelegt, so dass das Produkt freie Isocyanatgruppen aufweist.

Beispiele für Polyisocyanate, die sich zur Herstellung solcher Präpolymerer eignen, sind m-Phenylendiisocyanat, p-Phenylen-diisocyanat, 2,6-Diisocyanatotoluol, 2,4-Diisocyanatotoluol sowie dessen technische Gemische mit 2,6-Diisocyanatotoluol, 1,5-Diisocyanatonaphthalin, 4,4′-Diisocyanatodiphenylmethan sowie technische Gemische verschiedener Diisocyanatodiphenylmethane (beispielsweise der 4,4′- und der 2,4′-Isomeren), urethanisiertes 4,4′-Diisocyanatodiphenylmethan, carbodiimidisiertes 4,4′-Diisocyanatodiphenylmethan, das Urethdion des 2,4-Diisocyanatotoluols, Triisocyanatotriphenylmethan, das Addukt aus Diisocyanatotoluol und Trimethylolpropan, das Trimerisat aus Diisocyanatotoluol, Diisocyanato-m-xylylen, N,N′-Di-(4-methyl-3-isocyanatophenyl)-harnstoff, Mischtrimerisationsprodukte von Diisocyanatotoluol und 1,6-Diisocyanatohexamethylen, 1,6-Diisocyanatohexan, Cyclohexan-1,4-diisocyanat, 3,5,5-Trimethyl-1-isocyanatomethylcyclohexan (Isophorondiisocyanat), N,N′,N″-Tri-(6-isocyanatohexyl)-biuret, 2,2,4-Trimethyl-1,6-diisocyanatohexan, 1-Methyl-2,4-diisocyanatocyclohexan, Dimeryldiisocyanat, 4,4′-Bis-(isocyanato)-3,3′-dimethylbiphenyl, 4,4′-Diisocyanatodicyclohexylmethan, trimeres Isophorondiisocyanat, trimeres Hexandiisocyanat und 2,6-Diisocyanatohexansäuremethylester. Diese Verbindungen sind in der Technik der Polyurethane bekannt und grösstenteils kommerziell erhältlich.

Beispiele für präpolymere, hydroxyl-terminierte Polyester leiten sich von Dicarbonsäuren und Dialkoholen ab, die oben als Bildungskomponenten für Glycidylester oder -ether beschrieben wurden. Es kann sich auch um Polylactone handelt, beispielsweise um das Addukt von ε-Caprolacton an Polyhydroxyl- oder Polyaminverbindungen. Beispiele für präpolymere, hydroxyl-terminierte Polyether sind Polyalkylenglykole, insbesondere Polypropylen- oder Polybutylenglykole. Diese Präpolymeren sind ebenfalls in der Technik der Polyurethane bekannt und grösstenteils kommerziell erhältlich.

Beispiele für niedermolekularen Verbindungen enthaltend mehrere Gruppen mit aktiven Wasserstoffatomen, die zusammen mit den Polyisocyanat-Präpolymeren eingesetzt werden können, sind die Carbonsäuren oder insbesondere die Alkohole, die bereits weiter oben als Bildungskomponenten für Glycidylester oder -ether beschrieben wurden. Besonders bevorzugt setzt man Cyclohexanol-tetramethylol ein.

Bei $R_1$ als zwei- oder dreiwertigem aromatischem Rest kann es sich um einen carbocyclisch-aromatischen Rest handeln oder um einen heterocyclisch-aromatischen Rest, der sich von einem carbocyclisch-aromatischen Rest ableitet, worin ein bis drei Ringkohlenstoffatome durch Sauerstoff-, Schwefel- und/oder Stickstoffatome ersetzt sind.

Stellt $R_1$ einen zwei- oder dreiwertigen carbocyclisch-aromatischen Rest dar, so handelt es sich dabei im allgemeinen um einen aromatischen Kohlenwasserstoffrest mit sechs bis vierzehn, vorzugsweise sechs, Ringkohlenstoffatomen, der gegebenenfalls mit den oben angegebenen Resten substituiert ist.

Beispiele für solche aromatische Kohlenwasserstoffreste sind Phenylen, Naphthylen, Biphenylen und zwei, drei oder vier über Brückenglieder miteinander verknüpfte Phenylenreste.

Stellt $R_1$ einen zwei- oder dreiwertigen heterocyclisch-aromatischen Rest dar, der sich von einem carbocyclisch-aromatischen Rest ableitet, worin ein bis drei Ringkohlenstoffatome durch Sauerstoff-,

Schwefel- und/oder Stickstoffatome ersetzt sind, so handelt es sich dabei im allgemeinen um einen aromatischen Rest mit vier bis zehn Ringkohlenstoffatomen und ein bis drei Ringsauerstoff-, -schwefel- und/oder -stickstoffatomen, der gegebenenfalls mit den oben angegebenen Resten substituiert ist. Ein heterocyclischaromatischer Rest $R_1$ ist vorzugsweise fünf- oder sechsgliedrig und enthält vorzugsweise bis zu drei Ringstickstoffatome oder ein oder zwei Ringsauerstoff- oder -schwefelatome oder auch unterschiedliche Ringheteroatome, beispielsweise ein Stickstoff- und ein Sauerstoffatom.

$R_1$ ist bevorzugt ein zwei- oder dreiwertiger carbocyclisch-aromatischer Rest.

Mehrkernige Reste $R_1$ können als kondensierte Systeme vorliegen oder mehrere aromatische Systeme, wie Phenylenreste, sind über Brückenglieder miteinander verknüpft.

Beispiele für solche Brückenglieder sind eine direkte C-C-Bindung, -O-, -S-,-CO-, Alkylen bei dem gegebenenfalls ein oder mehrere Kohlenstoffatome durch Sauerstoff oder Stickstoffatome ausgetauscht sind, oder Cycloalkylen, das gegebenenfalls Teil einer Alkylenkette ist.

Vorzugsweise handelt es sich bei $R_1$ um einen Rest der Formeln IIa, IIb oder IIc

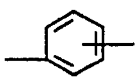 (IIa), 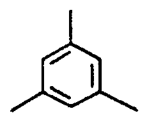 (IIb),

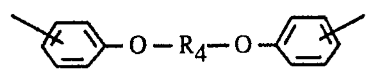 (IIc),

worin $R_4$ Alkylen, insbesondere $C_1$-$C_{12}$-Alkylen, ein zweiwertiger Rest eines Poly-(oxyalkylenglykols) nach dem Entfernen der endständigen Hydroxylgruppen, Cycloalkylen oder ein Rest der Formel IIIa, IIIb oder IIIc ist

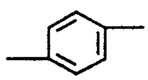 (IIIa), 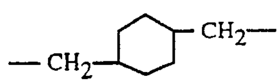 (IIIb),

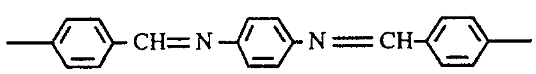 (IIIc).

Besonders bevorzugte Reste $R_1$ sind 1,3- oder 1,4-Phenylen oder Reste der oben definierten Formel IIc, worin die freien Valenzen sich in 4,4'-Position befinden und $R_4$ ein Rest der Formel IIIa ist.

Bedeuten irgendwelche Substituenten oder Reste $R_2$ oder $R_3$ Alkyl, so handelt es sich dabei um verzweigte oder insbesondere um geradkettige Reste, die im allgemeinen ein bis zwölf Kohlenstoffatome aufweisen. Bevorzugt werden geradkettige Alkylreste mit ein bis sechs Kohlenstoffatomen, insbesondere Methylreste.

Beispiele für Alkylreste sind Methyl, Ethyl, n-Propyl, Isopropyl, n-Butyl, sek.Butyl, tert.Butyl, n-Pentyl, n-Hexyl, n-Heptyl, n-Octyl, 2-Ethylhexyl, n-Nonyl, n-Decyl, n-Undecyl und n-Dodecyl.

Bedeuten irgendwelche Reste $R_2$ oder $R_3$ Alkenyl, so handelt es sich dabei um verzweigtes oder insbesondere um geradkettige Reste. Alkenylreste weisen im allgemeinen zwei bis sechs Kohlenstoffatome auf. Beispiele für Alkenylreste sind Vinyl, Prop-1-enyl, Prop-2-enyl, n-But-3-enyl, n-Pent-4-enyl oder n-Hex-5-enyl. Bevorzugt werden geradkettige Alkenylreste mit zwei oder drei Kohlenstoffatomen, insbesondere Vinyl, Prop-1-enyl oder Prop-2-enyl (Allyl).

Bedeuten irgendwelche Substituenten oder Reste $R_2$ oder $R_3$ Cycloalkyl, so handelt es sich dabei im allgemeinen um Reste mit fünf bis acht Ringkohlenstoffatomen.

Beispiele dafür sind Cyclopentyl, Cyclohexyl, Cycloheptyl oder Cyclooctyl. Bevorzugt wird Cyclohexyl.

Bedeuten irgendwelche Substituenten oder Reste $R_2$ oder $R_3$ Aryl, so handelt es sich dabei im allgemeinen um aromatische Kohlenwasserstoffreste mit sechs bis vierzehn, insbesondere sechs, Kohlenstoffatomen.

Beispiele dafür sind Phenyl, Naphthyl, Biphenyl oder Anthryl. Bevorzugt wird Phenyl.

Bedeuten irgendwelche Substituenten oder Reste $R_2$ oder $R_3$ Aralkyl, so handelt es sich dabei in der Regel um Gruppen mit sieben bis zwölf Kohlenstoffatomen, die gegebenenfalls mit den oben angegebenen

Resten substituiert sind.

Ein Beispiel dafür ist Benzyl.

Ist $R_4$ Alkylen, so handelt es sich dabei in der Regel um Alkylengruppen mit einem bis zwölf Kohlenstoffatomen.

Beispiele für Alkylenreste sind Methylen, Ethylen, Tri-, Tetra-, Penta-, Hexa-, Hepta-, Octa-, Nona-, Deca-, Undeca- und Dodecamethylen. Bevorzugt werden Tetra-, Hexa- und Octamethylen.

Ist $R_4$ Cycloalkylen, so handelt es sich dabei in der Regel um Cycloalkylengruppen mit fünf oder sechs Ringkohlenstoffatomen, die gegebenenfalls mit den für $R_1$ angegebenen Resten substituiert sind.

Beispiele für Cycloalkylenreste sind Cyclopentylen, Cyclohexylen und Methylcyclohexylen.

In den Alkylresten $R_2$ oder $R_3$ oder in den Alkylenresten $R_4$ können ein oder mehrere Kohlenstoffatome durch Sauerstoffatome ersetzt sein, so dass Polyalkylenglykolreste auftreten. Beispiele für derartig modifizierte Alkylenketten sind Reste, die sich von Poly alkylenglykolen ableiten. Beispiele für derartig modifizierte Alkylreste sind Derivate, die sich von Polyalkylenglykolmonoalkylethem ableiten.

Sind in irgendwelchen cyclischen Resten $R_2$ bis $R_3$ ein bis drei Ringkohlenstoffatome durch Sauerstoff-, Schwefel- und/oder Stickstoffatome ersetzt, so kann es sich dabei um aromatische oder um nicht aromatische heterocyclische Systeme handeln, die vorzugsweise fünf- oder sechsgliedrig sind. In solchen Systemen sind vorzugsweise ein bis drei Ringkohlenstoffatome durch Stickstoffatome oder ein oder zwei Ringkohlenstoffatome durch Sauerstoff- oder Schwefelatome ersetzt. Es können auch unterschiedliche Heteroatome in einem Ring auftreten, beispielsweise ein Stickstoff- und ein Sauerstoffatom.

Die Definition "ein bis drei Ringkohlenstoffatome sind durch Sauerstoff-, Schwefel-und/oder Stickstoffatome ersetzt" umfasst auch solche heterocyclischen Systeme, bei denen die Ringheteroatome neben der Einbindung in das Ringsystem noch ihrerseits zusätzliche Atome oder Substituenten tragen. Beispiele für solche Heterogruppen sind -NH- oder -N(Alkyl)-.

Die Reste $R_1$ bis $R_4$ sind in der Regel unsubstituiert. Sie können aber ihrerseits auch Alkyl-, Alkoxy-, Alkylthio-, Cycloalkyl-, Aryl-, Aralkyl-, Cyano-, Alkoxycarbonyl- oder Halogensubstituenten tragen.

Beispiele für Alkyl-, Cycloalkyl-, Aryl- oder Aralkylgruppen sind bereits weiter oben gegeben.

Alkoxyreste weisen im allgemeinen 1-6 Kohlenstoffatome auf. Beispiele dafür sind Methoxy, Ethyloxy, n-Propyloxy, Isopropyloxy, n-Butyloxy, n-Pentyloxy und n-Hexyloxy.

Alkylthioreste weisen im allgemeinen 1-6 Kohlenstoffatome auf. Beispiele dafür sind Methylthio, Ethylthio, n-Propylthio, Isopropylthio, n-Butylthio, n-Pentylthio und n-Hexylthio.

Bedeuten irgendwelche Substituenten Alkoxycarbonylgruppen, so handelt es sich dabei beispielsweise um solche Reste, die als Alkylgruppen die oben für Alkyl beispielhaft aufgezählten Rest aufweisen.

Bedeuten irgendwelche Substituenten Halogen, so handelt es sich dabei im allgemeinen um Fluor, lod oder insbesondere um Chlor oder um Brom.

Bevorzugte Reste $R_2$ oder $R_3$ oder $R_2$ und $R_3$ sind Wasserstoff, $C_1$-$C_6$-Alkyl, $C_3$-$C_6$-$\omega$-Cyano-alkyl, $C_2$-$C_3$-Alkenyl, Cyclohexyl, Phenyl, Tolyl oder Benzyl.

Besonders bevorzugte Komponenten B) sind Verbindungen der Formel I, worin $R_1$ 1,4-Phenylen ist, m 2 bedeutet, n 2 oder 3 ist und $R_2$ und $R_3$ jeweils Wasserstoff, Methyl oder 2-Cyanoethyl sind oder $R_2$ Wasserstoff ist und $R_3$ Methyl bedeutet.

Die Verbindungen der Formel I sind im allgemeinen bei Raumtemperatur fest.

Besonders bevorzugt verwendet man Verbindungen der Formel I, die einen Schmelzpunkt zwischen 50 und 200 °C, ganz besonders bevorzugt zwischen 100 und 200 °C, besitzen und die sich unterhalb ihres Schmelzpunktes praktisch nicht in Komponente A) lösen. Systeme enthaltend solche Verbindungen zeichnen sich durch eine besonders hohe Latenz aus.

Bevorzugte erfindungsgemässe Zusammensetzungen enthalten als Härter eine Verbindung der Formel I, worin mindestens einer der Reste $R_2$ oder $R_3$ Wasserstoff ist.

Die Menge des Härters der Formel I in diesen Zusammensetzungen wird im allgemeinen so gewählt wird, so dass auf eine sekundäre Aminogruppe der Verbindung der Formel I etwa ein bis zwei Isocyanatgruppen oder etwa ein bis drei Epoxidgruppen der Komponente A) entfallen. Vorzugsweise wird etwa die der Anzahl der Epoxid- oder Isocyanatgruppen äquivalente Menge an sekundären Aminogruppen eingesetzt.

Wird die Verbindung der Formel I als Beschleuniger eingesetzt, so wird dessen Menge im allgemeinen so gewählt, so dass auf eine sekundäre oder tertiäre Aminogruppe der Verbindung der Formel I etwa bis zu 0,18 Isocyanatgruppen oder Epoxidgruppen entfallen.

Die Verbindungen der Formel I sind neu mit Ausnahme des Derivates, worin $R_1$ 1,4-Phenylen ist, m und n 2 sind und $R_2$ und $R_3$ Methyl, Ethyl oder Benzyl bedeuten oder worin $R_1$ 2-Methyl-1,4-phenylen ist, m und n 2 sind und $R_2$ und $R_3$ Methyl bedeuten.

Die neuen Verbindungen sind ebenfalls ein Gegenstand der vorliegenden Erfindung. Die vorbekannten

Verbindungen, worin $R_2$ und $R_3$ Methyl bedeutet, sind von K.Y. Jen et al. in Polym. Mater. Sci., Eng., **53**, 84(1985) als Zwischenprodukte für die Herstellung von leitfähigen Polymeren beschrieben worden. Die vorbekannten Verbindungen, worin $R_2$ und $R_3$ Ethyl oder Benzyl bedeutet, sind in der JP-A-63-82414 und -63-82415 als Zusätze zu photographischen Schichten beschrieben worden.

Die Erfindung betrifft ferner die Verwendung der Verbindungen der Formel I als Härter oder als Härtungsbeschleuniger für Epoxidharze mit durchschnittlich mehr als einer 1,2-Epoxidgrüppe pro Molekül oder für aliphatische, cycloaliphatische, aromatische oder araliphatische Verbindungen mit durchschnittlich mehr als einer Isocyanatgruppe pro Molekül.

Die Verbindungen der Formel I lassen sich herstellen, indem man einen Di- oder Trialdehyd der Formel IV

$R_1-(CHO)_m$, (IV)

mit einer etwa der Anzahl der Aldehydgruppen entsprechenden molaren Menge eines sekundären oder primären Diamins der Formel V umsetzt

$$R_2-HN-(CH_2)_n-NH-R_3 , \qquad (V)$$

worin $R_1$, $R_2$, $R_3$, m und n die oben definierte Bedeutung besitzen.

Die Reaktion erfolgt vorzugsweise in einem inerten organischen Lösungsmittel, das zumindestens eines der beiden Ausgangsprodukte löst. Die Reaktionstemperatur wird, je nach Reaktivität der Ausgangsprodukte, von etwa 0 °C bis zur Rückflusstemperatur des jeweiligen Lösungsmittels gewählt.

Die Härtung der erfindungsgemässen Zusammensetzungen erfolgt im allgemeinen bei erhöhten Temperaturen, beispielsweise zwischen 80 und 250 °C, bevorzugt zwischen 100 und 180 °C. Die Härtung kann gewünschtenfalls auch in zwei Stufen vorgenommen werden, indem man z.B. den Härtungsvorgang unterbricht oder indem man die härtbare Mischung bei tieferen Temperaturen teilweise härten lässt. Die dabei erhaltenen Produkte sind noch schmelzbare und lösliche Präkondensate (sogenannte "B-Stufenharze") und eignen sich z.B. für Pressmassen, Sinterpulver oder Prepregs.

Gewünschtenfalls kann man den härtbaren Zusammensetzungen zur Herabsetzung der Viskosität reaktive Verdünner, wie z.B. Styroloxid, Butylglycidylether, 2,2,4-Trimethylpentylglycidylether, Phenylglycidylether, Kresylglycidylether oder Glycidylester von synthetischen, hochverzweigten, in der Hauptsache tertiären aliphatischen Monocarbonsäuren, zusetzen. Als weitere übliche Zusätze können die erfindungsgemässen Gemische ferner Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Wollastonit, Kaolin, Kieselsäureaerogel oder Metallpulver, z.B. Aluminiumpulver oder Eisenpulver, ferner Pigmente und Farbstoffe, wie Russ, Oxidfarben und Titandioxid, sowie Flammschutzmittel, Thixotropiemittel, Verlaufmittel (die zum Teil auch als Formtrennmittel Anwendung finden), wie Silicone, Wachse und Stearate, oder Haftvermittler, Antioxidantien und Lichtschutzmittel enthalten.

Ein Verfahren zur Herstellung gehärteter Epoxid- oder Isocyanatharze aus den erfindungsgemässen Zusammensetzungen, worin die Verbindungen der Formel I als Härter eingesetzt werden, umfasst die Schritte

i) Vermischen von Komponente A) gemäss der obigen Definition mit einer für die Härtung ausreichenden Menge einer Verbindung der Formel I, worin mindestens eine sekundäre Aminogruppe vorliegt, gegebenenfalls unter Zugabe von an sich üblichen Zusätzen und

ii) Erhitzen der Zusammensetzung auf eine Temperatur und für eine solche Zeitdauer, so dass die Zusammensetzung durch und durch gehärtet wird.

Ein weiteres Verfahren zur Herstellung gehärteter Epoxid- oder Isocyanatharze aus den erfindungsgemässen Zusammensetzungen, worin die Verbindungen der Formel I als Beschleuniger eingesetzt werden, umfasst die Schritte

i) Vermischen von Komponente A) gemäss der obigen Definition mit einer für die Härtung ausreichenden Menge eines latenten Härters für besagte Komponente A), der keine Verbindung der Formel I ist, und einer für die Beschleunigung ausreichenden Menge einer Verbindung der Formel I gegebenenfalls unter Zugabe von an sich üblichen Zusätzen und

ii) Erhitzen der Zusammensetzung auf eine Temperatur und für eine solche Zeitdauer, so dass die Zusammensetzung durch und durch gehärtet wird.

Diese Verfahren betreffen die Verarbeitung von bei Raumtemperatur lagerstabilen und gleichzeitig bei erhöhten Temperaturen überraschend reaktiven Zusammensetzungen und sind ebenso wie die mit diesen

Verfahren erhältlichen gehärteten Produkte ein Gegenstand der vorliegenden Erfindung.

Die erfindungsgemässen Zusammensetzungen lassen sich ganz allgemein zur Herstellung von gehärteten Produkten einsetzen, und können in der dem jeweils speziellen Anwendungsgebiet angepassten Formulierung, beispielsweise als Beschichtungsmassen, Lacke, Pressmassen, Imprägnierharze, Laminierharze, Klebmittel oder Matrixharze eingesetzt werden. Insbesondere lassen sich die erfindungsgemässen Zusammensetzungen als Schmelzkleber verwenden.

Die Erfindung betrifft auch die Verwendung der härtbaren Zusammensetzungen für die oben erwähnten Zwecke.

Die folgenden Beispiele erläutern die Erfindung.

Beispiel 1: Herstellung von

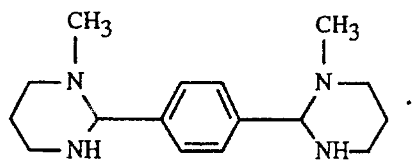

Zu einer Suspension von 100 g (0,745 Mol) Terephthalsäuredialdehyd in 400 ml Toluol tropft man 131,4 g (1,43 Mol) 3-Methylaminopropylamin. Die erhaltene Lösung wird sechs Stunden lang an einem Wasserabscheider unter Rückfluss erhitzt. Nach Abkühlen der Lösung erhält man einen weissen Niederschlag. Dieser wird abfiltriert und aus Toluol umkristallisiert. Man erhält 130 g eines weissen Produktes vom Schmelzpunkt 130-130,5 °C und den folgenden Analysewerten:

$^1$H-NMR (100 MHz): $\delta$ = 7,38 (s,4H), 3,67 (s,2H), 3,19-3,08 (m, 4H), 2,76 (td, $J_{gem}$ = 10Hz, $J_{vic}$ = 3Hz, $2H_{ax}$), 2,30 (td, $J_{gem}$ = 10 Hz, $J_{vic}$ = 3 Hz, 2 $H_{ax}$ 1,92 (s, 6H) und 1,69-1,59 (m, 6H).

$^{13}$C-NMR: $\delta$ = 141,9, 127,4, 83,3, 56,3, 45,6, 42,7 und 27,4.

| Elementaranalyse: | %C | %H | %N |
|---|---|---|---|
| berechnet | 70,03 | 9,55 | 20,42 |
| gefunden | 70.05 | 9,51 | 20,31. |

Beispiel 2: Herstellung von

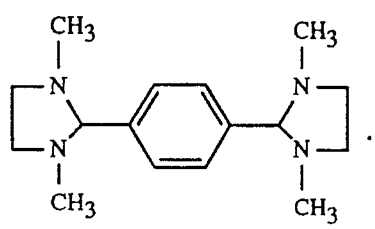

Zu einer Suspension von 50 g (0,372 Mol) Terephthalsäuredialdehyd in 400 ml Toluol tropft man 80 g N,N′-Dimethylethylendiamin. Die erhaltene Lösung wird sechs Stunden lang an einem Wasserabscheider unter Rückfluss erhitzt. Nach dem Abziehen des Lösungsmittels mit Hilfe eines Rotationsverdampfers wird der Rückstand destilliert ($K.P._{0,01\ mbar}$ = 110 °C). Man erhält 130 g eines weissen Feststoffes vom Schmelzpunkt 85°C und den folgenden Analysewerten:

$^1$H-NMR (100 MHz): $\delta$ = 7,43 (s, 4H), 3,49-3,32 (m, 4H), 3,27 (s, 2H), 2,64-2,47 (m, 4H) und 2,19 (s, 12H).

$^{13}$C-NMR: $\delta$ = 140,5, 128,6, 92,1, 53,3 und 39,5.

| Elementaranalyse: | %C | %H | %N |
|---|---|---|---|
| berechnet | 70,03 | 9,55 | 20,42 |
| gefunden | 70.02 | 9,50 | 20,46. |

Beispiel 3: Herstellung von

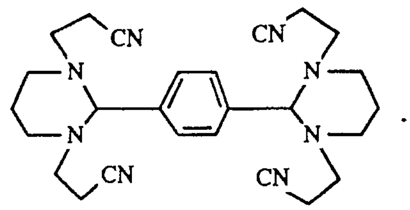

Eine Lösung von 86 g (1,16 Mol) 1,3-Diaminopropan in 400 ml Methanol wird aufs 5 °C abgekühlt. Dazu tropft man 123 g (2,32 Mol) Acrylnitril. Die erhaltene Lösung wird sechs Stunden lang bei Raumtemperatur gerührt und dann wird das Methanol am Rotationsverdampfer abgezogen. Der Rückstand wird zu einer Suspension von 77,8 g (0,58 Mol) Terephthalsäuredialdehyd in 200 ml Toluol getropft. Die Mischung wird sechs Stunden lang an einem Wasserabscheider unter Rückfluss erhitzt. Nach dem Abziehen des Lösungsmittels am Rotationsverdampfer erhält man einen weissen Feststoff, der aus Ethylacetat/Hexan umkristallisiert wird. Ausbeute: 170 g; Schmelzpunkt 105 °C. Analysewerte:
$^1$H-NMR (100 MHz): $\delta$ = 7,54 (s, 4H), 3,76 (s, 2H) und 3,21-1,70 (m, 28H).
$^{13}$C-NMR: $\delta$ = 140,4, 129,8, 118,7, 85,6, 51,3, 48,9, 23,8 und 16,4.

| Elementaranalyse: | %C | %H | %N |
|---|---|---|---|
| berechnet | 68,09 | 7,47 | 24,43 |
| gefunden | 68,20 | 7,47 | 24,43. |

Beispiel 4: Herstellung von

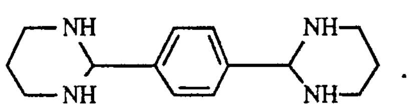

Zu einer Suspension von 44,3 g (0,33 Mol) Terephthalsäuredialdehyd in 200 ml Toluol gibt man 48,9 g (0,66 Mol) 1,3-Diaminopropan. Die erhaltene Mischung wird sechs Stunden lang an einem Wasserabscheider unter Rückfluss erhitzt. Das Lösungsmittel wird am Rotationsverdampfer abgezogen und der weisse Rückstand wird aus Toluol umkristallisiert. Man erhält 53 g eines weissen Pulvers vom Schmelzpunkt 82 °C und den folgenden Analysewerten:

| Elementaranalyse: | %C | %H | %N |
|---|---|---|---|
| berechnet | 68,26 | 9,00 | 22,74 |
| gefunden | 68.35 | 8,89 | 22,65. |

Beispiel 5: Härtung eines Epoxidharzes mit festen Aminalen

25 g eines Diglycidylethers auf Basis von Bisphenol A (Epoxidäquivalent 5,54 Val/kg) werden mit einem Aminal und disperser Kieselsäure (Aerosil® 380) vermischt. Die verwendeten Aminale, die Mengen der einzelnen Bestandteile und einige Eigenschaften der härtbaren Mischungen bzw. der gehärteten Produkte sind in der folgenden Tabelle 1 aufgelistet.

Tabelle 1:

| Beispiel Nr. | 5a | 5b | 5c | 5d |
|---|---|---|---|---|
| Bisphenol A Diglycidylether (g) | 25 | 25 | 25 | 25 |
| Aminal nach Bsp. 1 (g) | 4,7 | - | - | - |
| Aminal nach Bsp. 2 (g) | - | 2,4 | - | - |
| Aminal nach Bsp. 3 (g) | - | - | 3,3 | - |
| Aminal nach Bsp. 4 (g) | - | - | - | 2,8 |
| Aerosil® 380 (g) | 1,5 | 0,5 | 0,5 | 0,8 |
| Gelzeiten bei | | | | |
| 100 °C | 60′ | - | - | 20′ 40″ |
| 120 °C | 42′ | - | - | 11′ |
| 140 °C | 28′ | 1h 35′ | - | 5′ 30″ |
| 160 °C | 18′ | 1h 5′ | 1h 30′ | 4′ |
| DSC $T_{max}$(°C)[1] | n.b.[2] | 171 | >250 | 113/300 |
| Zugscherfestigkeit auf Stahl/Stahl (N/mm²) | 22,9[3] | 6,0[4] | n.b.[2] | n.b.[2] |
| Lagerstabilität (Wochen bei Raumtemperatur) | 1 | 1 | >4 | 1 |

[1] Temperatur, bei der die maximale Exothermie auftritt; bestimmt mit DSC (differential scanning calorimetry); Aufheizgeschwindigkeit: 10 °C/min;
[2]nicht bestimmt;
[3]1 Stunde Härtung bei 160 °C;
[4]1,5 Stunden Härtung bei 160 °C.

Beispiel 6: Härtung eines Polyurethan-Präpolymeren mit festen Aminalen

6.1. Herstellung des Polyurethan-Präpolymeren

Eine Mischung von 206 g Isophorondiisocyanat und 232 g eines hydroxyl-terminierten Polycaprolactontriols (Niax® PCP 310 der Fa. UCC) mit der Hydroxylzahl von 187 werden bei 100 °C unter Stickstoff gerührt bis ein Isocyanatgehalt von 9,3 % erreicht ist.

6.2. Herstellung und Untersuchung der härtbaren Mischungen

15 g des Polyurethan-Präpolymeren gemäss Beispiel 6.1. werden mit einem Aminal und disperser Kieselsäure (Aerosil® 380) vermischt. Die verwendeten Aminale, die Mengen der einzelnen Bestandteile und einige Eigenschaften der härtbaren Mischungen bzw. der gehärteten Produkte sind in der folgenden Tabelle 2 aufgelistet.

Tabelle 2:

| Beispiel Nr. | 6a | 6b | 6c | 6d | 6e | 6f |
|---|---|---|---|---|---|---|
| Polyurethan-Präpolymer (g) | 15 | 15 | 15 | 15 | 15 | 15 |
| Aminal nach Bsp. 1 (g) | 4,8 | 2,4 | - | - | - | - |
| Aminal nach Bsp. 2 (g) | - | - | 4,8 | - | - | - |
| Aminal nach Bsp. 3 (g) | - | - | - | 7,6 | 3,8 | - |
| Aminal nach Bsp. 4 (g) | - | - | - | - | - | 2,1 |
| Aerosil® 380 (g) | 0,4 | 0,4 | 0,5 | 0,4 | 0,3 | 0,3 |
| Glaskugeln (g) | 0,2 | 0,2 | - | - | 0,3 | 1,0 |
| Gelzeiten bei | | | | | | |
| 100 °C | 1h50′ | >2h | 15′ | 23′ | 31′ | 2′15″ |
| 120 °C | 20″ | >2h | 11′ | 6′ | 18′ | 2′ |
| 140 °C | 4″ | 45′ | 4′ | 3′30″ | 5′30″ | 1′15″ |
| 160 °C | <2″ | 13′ | 2′30″ | 2″ | 3′30″ | 30″ |
| DSC $T_{max}$(°C)[1] | 121 | 123 | 100 | 114/120 | 114/120 | 77[2] |
| Zugscherfestigkeit auf Stahl/Stahl (N/mm²) [3] | 19,5 | 8,4 | 12,8 | 9,9 | 12,3 | 13,1 |
| Lagerstabilität (Wochen b. Raumtemp.) | >6 | >6 | >6 | >5 | >5 | >3 |

[1] Temperatur, bei der die maximale Exothermie auftritt; bestimmt mit DSC (differential scanning calorimetry); Aufheizgeschwindigkeit: 10 °C/min;
[2] Offset bei 35 °C;
[3] Härtung: 6a (30′.140 °C), 6b (90′.140 °C), 6c (45′.140 °C), 6d (60′/140 °C), 6e (60′/140 °C), 6f (30′/140 °C).

Beispiel 7: Härtung eines Epoxidharzes mit Dicyandiamid und festen Aminalen

25 g eines Diglycidylethers auf Basis von Bisphenol A (Epoxidäquivalent 5,54 Val/kg) werden mit Dicyandiamid, einem Aminal und disperser Kieselsäure (Aerosil® 380) vermischt. Die verwendeten Aminale, die Mengen der einzelnen Bestandteile und einige Eigenschaften der härtbaren Mischungen bzw. der gehärteten Produkte sind in der folgenden Tabelle 3 aufgelistet.

Tabelle 3:

| Beispiel Nr. | 7a | 7b | 7c | 7d | 7e |
|---|---|---|---|---|---|
| Bisphenol A Diglycidylether (g) | 25 | 25 | 25 | 25 | 25 |
| Dicyandiamid (g) | 1,9 | 1,0 | 1,0 | 1,0 | 1,0 |
| Aminal nach Bsp. 1 (g) | 3,5 | 1,7 | - | - | - |
| Aminal nach Bsp. 2 (g) | - | - | 1,7 | - | - |
| Aminal nach Bsp. 3 (g) | - | - | - | 2,8 | - |
| Aminal nach Bsp. 4 (g) | - | - | - | - | 0,7 |
| Aerosil® 380 (g) | 1,5 | 1,0 | 1,3 | 0,5 | 0,9 |
| Gelzeiten bei | | | | | |
| 100 °C | 18′ | 40′ | 45′ | - | 50′ |
| 120 °C | 5′20″ | 20′ | 28′ | - | 6′23″ |
| 140 °C | 2′10″ | 13′30″ | 23′ | >2h | 2′40″ |
| 160 °C | 1′20″ | 11′ | 18′30″ | 50′30″ | 1′30″ |
| DSC $T_{max}$(°C)[1)] | n.b.[2)] | 91.154 | 126/140 | 187 | 116/189 |
| Zugscherfestigkeit auf Stahl/Stahl ($N/mm^2$) [3)] | 19,1 | 18,8 | 14,8 | 18,2 | 13,7 |
| Lagerstabilität (Wochen bei Raumtemperatur) | 1 | 4 | 2 | >5 | >3 |

[1)] Temperatur, bei der die maximale Exothermie auftritt; bestimmt mit DSC (differential scanning calorimetry); Aufheizgeschwindigkeit: 10 °C/min;
[2)]n.b. = nicht bestimmt;
[3)]Härtung: 7a (1h′.160 °C), 7b (1h.160 °C), 7c (45′.160 °C), 7d (1,5h.160 °C), 7e (1h/160° C).

Beispiel 8: Härtung eines Polyurethan-Präpolymeren mit einem festen Polyol in Gegenwart von Aminalen

20 g des Polyurethan-Präpolymeren gemäss Beispiel 6.1. werden mit 3,0 g Cyclohexanoltetramethylol, 0,5 g eines Aminals und 0,3 g disperser Kieselsäure (Aerosil® 380) vermischt. Die verwendeten Aminale, die Mengen der einzelnen Bestandteile und einige Eigenschaften der härtbaren Mischungen bzw. der gehärteten Produkte sind in der folgenden Tabelle 4 aufgelistet.

Tabelle 4:

| Beispiel Nr. | 8a | 8b | 8c | 8d |
|---|---|---|---|---|
| Polyurethan-Präpolymer (g) | 20 | 20 | 20 | 20 |
| Cyclohexanol-tetramethylol[1](g) | 3 | 3 | 3 | 3 |
| Aminal nach Bsp. 1 (g) | - | 0,5 | - | - |
| Aminal nach Bsp. 2 (g) | - | - | 0,7 | - |
| Aminal nach Bsp. 3 (g) | - | - | - | 0,5 |
| Aerosil® 380 (g) | 0,3 | 0,2 | 0,3 | 0,3 |
| Gelzeiten bei | | | | |
| 100 °C | >2h | >2h | 8' | 31' |
| 120 °C | 53'20" | 38' | 3' | 10' |
| 140 °C | 31'30" | 20' | 2' | 6' |
| 160 °C | 16' | 8'30" | 1'10" | 1'38" |
| DSC $T_{max}$(°C)[2] | 151 | 143 | 140 | 152 |
| Zugscherfestigkeit auf Al/Al $(N/mm^2)$[3] | 12,5 | 17,3 | 16,4 | 17,0 |
| Lagerstabilität (Wochen bei Raumtemperatur) | >5 | >5 | >5 | >5 |

1) 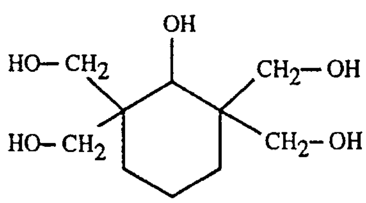 ;

2) Temperatur, bei der die maximale Exothermie auftritt; bestimmt mit DSC (differential scanning calorimetry); Aufheizgeschwindigkeit: 10 °C/min;

3) Härtung: 1h/140 °C.

**Ansprüche**

1. Härtbare Zusammensetzungen enthaltend

A) ein Epoxidharz mit durchschnittlich mehr als einer 1,2-Epoxidgruppe pro Molekül oder eine aliphatische, cycloaliphatische, aromatische oder araliphatische Verbindung mit durchschnittlich mehr als einer Isocyanatgruppe pro Molekül, und

B) eine Verbindung der allgemeinen Formel I

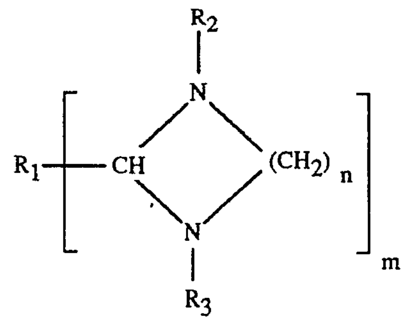

(I),

worin m und n unabhängig voneinander 2 oder 3 sind, $R_1$ ein zwei- oder dreiwertiger aromatischer Rest ist, $R_2$ und $R_3$ unabhängig voneinander Wasserstoff, Alkyl, Alkenyl, Cycloalkyl, Aryl oder Aralkyl bedeuten, wobei die Reste $R_1$, $R_2$ oder $R_3$ unsubstituiert sind oder mit Alkyl-, Alkoxy-, Alkylthio-, Cycloalkyl-, Aryl-, Aralkyl-, Cyano- und/oder Alkoxycarbonylgruppen und/oder mit Halogenatomen substituiert sind, wobei in Alkylresten $R_2$ und/oder $R_3$ ein oder mehrere Kohlenstoffatome durch Sauerstoffatome ersetzt sein können, so dass Polyalkylenglykolreste auftreten, und wobei in cyclischen Resten $R_1$ bis $R_3$ ein bis drei Ringkohlenstoffatome durch Sauerstoff-, Schwefel- und/oder Stickstoffatome ersetzt sein können.

2. Zusammensetzungen gemäss Anspruch 1, dadurch gekennzeichnet, dass Komponente A) ein Polyglycidylether auf Basis eines Polyalkohols, insbesondere eines Bisphenols, ist.

3. Zusammensetzungen gemäss Anspruch 2, dadurch gekennzeichnet, dass diese einen zusätzlichen wärmeaktivierbaren Härter für Komponente A) enthalten, insbesondere Dicyandiamid, und dass Komponente B) in einer die Härtungsreaktion beschleunigenden Menge vorliegt und insbesondere als Reste $R_2$ und $R_3$ keine Wasserstoffatome aufweist.

4. Zusammensetzungen gemäss Anspruch 1, dadurch gekennzeichnet, dass Komponen te A) ein aliphatisches, cycloaliphatisches, aromatisches oder araliphatisches Di- oder Triisocyanat ist, das insbesondere in Kombination mit einem präpolymeren Polyalkohol vorliegt.

5. Zusammensetzungen gemäss Anspruch 4, dadurch gekennzeichnet, dass das Polyisocyanat ein Additionsprodukte eines aliphatischen, cylcloaliphatischen, aromatischen oder araliphatischen Di- oder Triisocyanats an einen dihydroxyl-terminierten Polyester oder Polyether ist.

6. Zusammensetzungen gemäss Anspruch 1, dadurch gekennzeichnet, dass $R_1$ ein Rest der Formeln IIa, IIb oder IIc ist

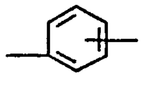

(IIa),

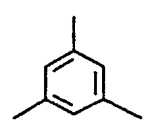

(IIb),

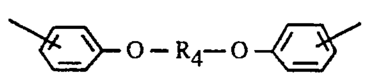

(IIc),

worin $R_4$ Alkylen, ein zweiwertiger Rest eines Poly-(oxyalkylenglykols) nach dem Entfernen der endständigen Hydroxylgruppen, Cycloalkylen oder ein Rest der Formel IIIa, IIIb oder IIIc ist

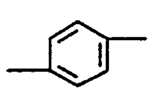

(IIIa),

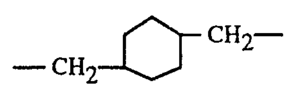

(IIIb),

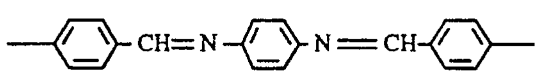

(IIIc).

7. Zusammensetzungen gemäss Anspruch 1, dadurch gekennzeichnet, dass $R_2$ oder $R_3$ oder $R_2$ und $R_3$ Wasserstoff, $C_1$-$C_6$-Alkyl, $C_3$-$C_6$-$\omega$-Cyano-alkyl, $C_2$-$C_3$-Alkenyl, Cyclo-hexyl, Phenyl, Tolyl oder Benzyl bedeuten.

8. Zusammensetzungen gemäss Anspruch 1, dadurch gekennzeichnet, dass $R_1$ 1,4-Phenylen ist, m 2 bedeutet, n 2 oder 3 ist und $R_2$ und $R_3$ jeweils Wasserstoff, Methyl oder 2-Cyanoethyl sind oder $R_2$ Wasserstoff ist und $R_3$ Methyl bedeutet.

9. Zusammensetzungen gemäss Anspruch 1, dadurch gekennzeichnet, dass als Kompo nente B) Verbindungen der Formel I gemäss Anspruch 1 eingesetzt werden, die einen Schmelzpunkt zwischen 50 und 200 °C besitzen und die sich unterhalb ihres Schmelzpunktes praktisch nicht in Komponente A) lösen.

10. Zusammensetzungen gemäss Anspruch 1, dadurch gekennzeichnet, dass diese als Härter eine Verbindung der Formel I gemäss Anspruch 1 enthalten, worin mindestens einer der Reste $R_2$ oder $R_3$ Wasserstoff ist.

11. Zusammensetzungen gemäss Anspruch 1, dadurch gekennzeichnet, dass die Menge des Härters der Formel I so gewählt wird, so dass auf eine sekundäre Aminogruppe der Verbindung der Formel I etwa ein bis zwei Isocyanatgruppen oder etwa ein bis drei Epoxidgruppen entfallen.

12. Zusammensetzungen gemäss Anspruch 1, dadurch gekennzeichnet, dass die Menge des Beschleunigers der Formel I so gewählt wird, so dass auf eine sekundäre oder tertiäre Aminogruppe der Verbindung der Formel I etwa bis zu 0,18 Isocyanatgruppen oder Epoxidgruppen entfallen.

13. Verbindungen der Formel I gemäss Anspruch 1, mit Ausnahme der Verbindungen, worin $R_1$ 1,4-Phenylen ist, m und n 2 sind und $R_2$ und $R_3$ Methyl, Ethyl oder Benzyl bedeuten oder worin $R_1$ 2-Methyl-1,4-phenylen ist, m und n 2 sind und $R_2$ und $R_3$ Methyl bedeuten.

14. Verfahren zur Herstellung gehärteter Epoxid- oder Isocyanatharze umfassend die Schritte

i) Vermischen von Komponente A) gemäss Anspruch 1 mit einer für die Härtung ausreichenden Menge einer Verbindung der Formel I, worin mindestens eine sekundäre Amiogruppe vorliegt, gegebenenfalls unter Zugabe von an sich üblichen Zusätzen und

ii) Erhitzen der Zusammensetzung auf eine Temperatur und für eine solche Zeitdauer, so dass die Zusammensetzung durch und durch gehärtet wird.

15. Verfahren zur Herstellung gehärteter Epoxid- oder Isocyanatharze umfassend die Schritte

i) Vermischen von Komponente A) gemäss Anspruch , mit einer für die Härtung ausreichenden Menge eines latenten Härters für besagte Komponente A), der keine Verbindung der Formel I gemäss Anspruch 1 ist, und einer für die Beschleunigung ausreichenden Menge besagter Verbindung der Formel I gegebenenfalls unter Zugabe von an sich üblichen Zusätzen und

ii) Erhitzen der Zusammensetzung auf eine Temperatur und für eine solche Zeitdauer, so dass die Zusammensetzung durch und durch gehärtet wird.

Patentansprüche für den Vertragsstaat ; ES

1. Härtbare Zusammensetzungen enthaltend

A) ein Epoxidharz mit durchschnittlich mehr als einer 1,2-Epoxidgruppe pro Molekül oder eine aliphatische, cycloaliphatische, aromatische oder araliphatische Verbindung mit durchschnittlich mehr als einer Isocyanatgruppe pro Molekül, und

B) eine Verbindung der allgemeinen Formel I

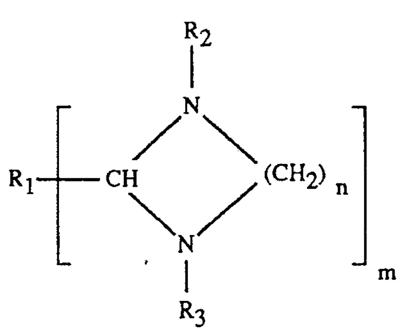

(I),

worin m und n unabhängig voneinander 2 oder 3 sind, $R_1$ ein zwei- oder dreiwertiger aromatischer Rest ist, $R_2$ und $R_3$ unabhängig voneinander Wasserstoff, Alkyl, Alkenyl, Cycloalkyl, Aryl oder Aralkyl bedeuten, wobei die Reste $R_1$, $R_2$ oder $R_3$ unsubstituiert sind oder mit Alkyl-, Alkoxy-, Alkylthio-,

Cycloalkyl-, Aryl-, Aralkyl-, Cyano- und/oder Alkoxycarbonylgruppen und/oder mit Halogenatomen substituiert sind, wobei in Alkylresten $R_2$ und/oder $R_3$ ein oder mehrere Kohlenstoffatome durch Sauerstoffatome ersetzt sein können, so dass Polyalkylenglykolreste auftreten, und wobei in cyclischen Resten $R_1$ bis $R_3$ ein bis drei Ringkohlenstoffatome durch Sauerstoff-, Schwefel- und/oder Stickstoffatome ersetzt sein können.

2. Zusammensetzungen gemäss Anspruch 1, dadurch gekennzeichnet, dass Komponente A) ein Polyglycidylether auf Basis eines Polyalkohols, insbesondere eines Bisphenols, ist.

3. Zusammensetzungen gemäss Anspruch 2, dadurch gekennzeichnet, dass diese einen zusätzlichen wärmeaktivierbaren Härter für Komponente A) enthalten, insbesondere Dicyandiamid, und dass Komponente B) in einer die Härtungsreaktion beschleunigenden Menge vorliegt und insbesondere als Reste $R_2$ und $R_3$ keine Wasserstoffatome aufweist.

4. Zusammensetzungen gemäss Anspruch 1, dadurch gekennzeichnet, dass Komponente A) ein aliphatisches, cycloaliphatisches, aromatisches oder araliphatisches Di- oder Triisocyanat ist, das insbesondere in Kombination mit einem präpolymeren Polyalkohol vorliegt.

5. Zusammensetzungen gemäss Anspruch 4, dadurch gekennzeichnet, dass das Polyisocyanat ein Additionsprodukte eines aliphatischen, cylcloaliphatischen, aromatischen oder araliphatischen Di- oder Triisocyanats an einen dihydroxyl-terminierten Polyester oder Polyether ist.

6. Zusammensetzungen gemäss Anspruch 1, dadurch gekennzeichnet, dass $R_1$ ein Rest der Formeln IIa, IIb oder IIc ist

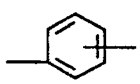 (IIa), 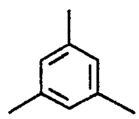 (IIb),

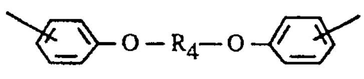 (IIc),

worin $R_4$ Alkylen, ein zweiwertiger Rest eines Poly-(oxyalkylenglykols) nach dem Entfernen der endständigen Hydroxylgruppen, Cycloalkylen oder ein Rest der Formel IIIa, IIIb oder IIIc ist

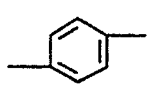 (IIIa), 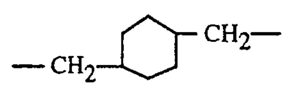 (IIIb),

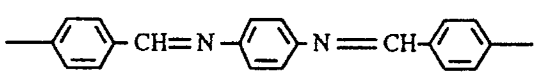 (IIIc).

7. Zusammensetzungen gemäss Anspruch 1, dadurch gekennzeichnet, dass $R_2$ oder $R_3$ oder $R_2$ und $R_3$ Wasserstoff, $C_1$-$C_6$-Alkyl, $C_3$-$C_6$-$\omega$-Cyano-alkyl, $C_2$-$C_3$-Alkenyl, Cyclohexyl, Phenyl, Tolyl oder Benzyl bedeuten.

8. Zusammensetzungen gemäss Anspruch 1, dadurch gekennzeichnet, dass $R_1$ 1,4-Phenylen ist, m 2 bedeutet, n 2 oder 3 ist und $R_2$ und $R_3$ jeweils Wasserstoff, Methyl oder 2-Cyanoethyl sind oder $R_2$ Wasserstoff ist und $R_3$ Methyl bedeutet.

9. Zusammensetzungen gemäss Anspruch 1, dadurch gekennzeichnet, dass als Komponente B) Verbindungen der Formel I gemäss Anspruch 1 eingesetzt werden, die einen Schmelzpunkt zwischen 50 und 200 °C besitzen und die sich unterhalb ihres Schmelzpunktes praktisch nicht in Komponente A) lösen.

10. Zusammensetzungen gemäss Anspruch 1, dadurch gekennzeichnet, dass diese als Härter eine Verbindung der Formel I gemäss Anspruch 1 enthalten, worin mindestens einer der Reste $R_2$ oder $R_3$ Wasserstoff ist.

11. Zusammensetzungen gemäss Anspruch 1, dadurch gekennzeichnet, dass die Menge des Härters der Formel I so gewählt wird, so dass auf eine sekundäre Aminogruppe der Verbindung der Formel I etwa ein bis zwei Isocyanatgruppen oder etwa ein bis drei Epoxidgruppen entfallen.

12. Zusammensetzungen gemäss Anspruch 1, dadurch gekennzeichnet, dass die Menge des Beschleunigers der Formel I so gewählt wird, so dass auf eine sekundäre oder tertiäre Aminogruppe der Verbindung

der Formel I etwa bis zu 0,18 Isocyanatgruppen oder Epoxidgruppen entfallen.

13. Verfahren zur Herstellung von Verbindungen der Formel I gemäss Anspruch 1, dadurch gekennzeichnet, dass man eine Verbindung der Formel IV

$R_1-(CHO)_m$, (IV)

mit einer etwa der Anzahl der Aldehydgruppen entsprechenden molaren Menge eines sekundären oder primären Diamins der Formel V umsetzt

$$R_2-HN-(CH_2)_n-NH-R_3 \quad , \qquad (V)$$

worin $R_1$, $R_2$, $R_3$, m und n die in Anspruch 1 definierte Bedeutung besitzen, mit Ausnahme der Verbindungen, worin $R_1$ 1,4-Phenylen ist, m und n 2 sind und $R_2$ und $R_3$ Methyl, Ethyl oder Benzyl bedeuten oder worin $R_1$ 2-Methyl-1,4-phenylen ist, m und n 2 sind und $R_2$ und $R_3$ Methyl bedeuten.

14. Verfahren zur Herstellung gehärteter Epoxid- oder Isocyanatharze umfassend die Schritte

i) Vermischen von Komponente A) gemäss Anspruch 1 mit einer für die Härtung ausreichenden Menge einer Verbindung der Formel I, worin mindestens eine sekundäre Amiogruppe vorliegt, gegebenenfalls unter Zugabe von an sich üblichen Zusätzen und

ii) Erhitzen der Zusammensetzung auf eine Temperatur und für eine solche Zeitdauer, so dass die Zusammensetzung durch und durch gehärtet wird.

15. Verfahren zur Herstellung gehärteter Epoxid- oder Isocyanatharze umfassend die Schritte

i) Vermischen von Komponente A) gemäss Anspruch 1 mit einer für die Härtung ausreichenden Menge eines latenten Härters für besagte Komponente A), der keine Verbindung der Formel I gemäss Anspruch 1 ist, und einer für die Beschleunigung ausreichenden Menge besagter Verbindung der Formel I gegebenenfalls unter Zugabe von an sich üblichen Zusätzen und

ii) Erhitzen der Zusammensetzung auf eine Temperatur und für eine solche Zeitdauer, so dass die Zusammensetzung durch und durch gehärtet wird.